# EUROPEAN PATENT APPLICATION

(11) **EP 3 372 429 A1**
(43) Date of publication of application: **12.09.2018**
(21) Application number: 17159636.4
(22) Date of filing: 07.03.2017
(51) Int. Cl.: B60K 1/00, B60K 7/00

(54) **A WORKING MACHINE AXLE ARRANGEMENT AND WORKING MACHINE**

(71) Applicant: Volvo Construction Equipment AB, 631 85 Eskilstuna (SE)
(72) Inventor: UNNEBÄCK, Joakim, 633 46 Eskilstuna (SE); ANKARLOO, Johan, 352 49 Växjö (SE)
(74) Representative: Volvo Technology Corporation

(57) **Abstract**

The invention relates to a working machine (1) and a working machine axle arrangement, comprising a propulsion axle (10) having an elongated main body (11) having two opposing end portions (12, 13) each being adapted to be equipped with a propulsion hub (14) for driving a working machine propulsion means (60). Further the elongated main body of the propulsion axle (10) being formed and sized to be mechanically coupled to a working machine frame (20). The working machine axle arrangement further comprise a drive shaft coupled to the propulsion hubs (14) and are arranged inside said main body. Further, the propulsion axle (10) further comprises an electrical engine (70) drivably coupled to said drive shaft and mounted onto a front side (16) of the elongated main body, wherein the front side (60) faces away from a centre of the working machine (1) when in use.

## Description

### TECHNICAL FIELD

The invention relates to a working machine axle arrangement and an autonomous, and electric or hybrid, working machine being equipped with such an axle.

### BACKGROUND

In the field of construction equipment there are a number of different working machines used to move, haul or dig raw material such as soil, gravel, rocks etcetera.

In connection with transportation of heavy loads, e.g. in contracting work, dump vehicles of the type of articulated haulers (also called frame-steered vehicles or dumpers) are frequently used. Such vehicles may be operated with large and heavy loads in areas where there are no roads, for example for transports in connection with road or tunnel building, sand pits, mines and similar environments.

State of the art working machines have been introduced to obtain autonomous capabilities and/or being at least partly electrically driven. Making an (at least partly) electrical working machine powerful enough to operate large and heavy loads sets high requirements on both the electrical engine and battery capacity. These requirements generate high costs for the vehicles. Therefore, there is a need for improving working machines being at least partly electrically propelled so as to reduce its costs.

### SUMMARY

In view of the above-mentioned and other drawbacks of the prior art, the object of the present inventive concept is to provide a working machine axle arrangement and a working machine being equipped with such an axle arrangement which at least alleviates above mentioned problems.

According to a first aspect of the invention the object is achieved by a working machine axle arrangement according to claim 1. More specifically by a working machine axle arrangement, comprising a propulsion axle having an elongated main body having two opposing end portions each being adapted to be equipped with a propulsion hub for driving a working machine propulsion means. Further the elongated main body of the propulsion axle being formed and sized to be mechanically coupled to a working machine frame. The working machine axle arrangement further comprise a drive shaft coupled to the propulsion hubs and being arranged inside said main body. Further, the propulsion axle further comprises an electrical engine drivably coupled to said drive shaft and mounted onto a front side of the elongated main body, wherein the front side faces away from a centre of the working machine when in use. Hereby, an axle arrangement is achieved that enables easy access to the electric engine, since it may be easily access without going under the working machine. Further, the engine will not have to share the restricted volume between the two axles, where many other components will be placed. Thus, a cheaper design and/or more optimal form may be given to the electrical engine and other components.

In one embodiment the propulsion axle's main body comprises an inner side facing the opposite direction relative the front side. Further, the propulsion axle may comprise an upper side and a lower side. Hereby, the four sides (front, inner, upper, lower) may form an at least partly sealed compartment for the drive shaft. Any one of the sides may be adapted to be coupled to the working machine frame.

According to a further embodiment, the working machine axle arrangement further comprises one steering mount portion on each one of the two opposing end portions and arranged onto an inner side of said main body, the inner side being opposite the front side relative a transversal centre line running along said elongated main body. It is to be understood that the longitudinal direction is a general direction of a working machine, being perpendicular to the transversal direction. The transversal direction is in the above text defined as the direction of the general extension of the propulsion axle.

Hereby, the electrical engine may be arranged on an opposite side of a steering arrangement attached to the steering mount portions, which allows a free design of the engine and the steering arrangement without having to share the same space. Hereby, a cheaper design and/or more optimal form may be given to the steering arrangement and/or the electrical engine.

According to a further embodiment, the working machine axle arrangement further comprises a gearbox adapted to transfer a torque or driving motion from said electrical engine to said drive shaft. Hereby, the output from the electrical engine may be optimized for the working machine. According to a further embodiment, the gear box is a single speed gearbox.

According to a further embodiment, the electrical engine is adapted to provide the service braking capability to the working machine, when in use. In the context of this application "service brake" shall be understood as any braking action during normal use of the working machine. Hereby, the working machine does not need any conventional brakes which both reduce the initial cost of the working machine and the cost of ownership due to e.g. service and wear. In yet one embodiment, the service braking capability is a regenerative braking capability so as to recover energy from braking. Hereby, the energy efficiency is vastly improved which lowers the capacity need of the batteries and thus lowers the cost.

According to a further embodiment, the gearbox, electrical engine or another component in the driving means, comprise an emergency brake function. Hereby, the working machine with an axle arrangement as described above may be stopped in case of an emergency or simply if the electrical engine, or the control of the electrical engine, fails. The emergency brake function may be implemented in any component of the driving means, i.e. engine, gearbox or driving shaft. The emergency brake function may be in communication with a control unit for remote activation/deactivation. It may also comprise a manual activation/deactivation means in proximity to the emergency brake.

According to a further embodiment, the elongated main body comprises a link arm mount adapted to be receive a link arm for coupling said main body to the frame of the working machine. In yet one embodiment the link arm mount may be a female mount portion or a male mount portion. A female mount portion should be understood as any type of aperture, such as a bore for receiving an end portion of the link arm. Such a female mount portion may comprise a bushing or a bearing.

According to a further embodiment, the working machine axle arrangement further comprises a cover arrangement formed and sized to protect said electrical engine. Wherein the cover arrangement is movably coupled to said axle's elongated main body. In one embodiment, the cover arrangement is detachably arranged to the axle arrangement for allowing maintenance of the electrical engine. In one embodiment, the cover arrangement is formed and sized so that it allows the propulsion means to obtain a full steering angle in any direction without interfering with the cover arrangement.

According to a further embodiment, the cover arrangement comprises a first cover for protection against dirt and gravel. In the context of this application, dirt and gravel may comprise any fragments of material from minerals stones, sand, soil or other material present at a construction working site. Further, in one embodiment, the first cover also protects the electrical engine from liquids like water etc. present at a worksite.

According to a further embodiment, the cover arrangement comprises a second cover protecting the electrical engine against impacts. In the context of this application, an impact should be interpreted as any collision with an object being relatively large, and typically situated on the ground. E.g. larger stones, jersey barriers, buildings, vehicles etc.

According to a further embodiment, the first cover is arranged closer to the engine than the second cover. Hereby, the first cover is protected against impacts by the second cover.

In one embodiment the first cover is made of a plastic or rubber based material. In another embodiment the first cover is made by a sheet metal. Examples of material for the first cover may be a thermoplastic material, thermoplastic olefins, sheet metal of steel, stainless steel or aluminium. In one embodiment the second cover has a frame shape. In one embodiment the second cover is made of a metal frame. Examples of material for the first cover may be any type of steel or other alloys having enough tensile strength to protect the engine from relevant impacts. In one embodiment the metal frame comprise horizontal round/square steel units connected to vertical round/square steel units, forming a bull bar. In one embodiment the bulbar is anchored in the main body of the propulsion axel.

In one embodiment the first cover is dimensioned to take up impact from objects being smaller than any distance between two frame parts of the second cover. The material and dimensions may be chosen so that the first cover can withstand forces up to a predetermined threshold, e.g. forces of at least 100 N, 1 kN, 5kN or more.

In one embodiment the first cover comprises at least four substantially sealed sides. In yet one embodiment the first cover comprises at least five substantially sealed sides. In one embodiment the first cover comprises at least one aperture for letting out fluids or fragments that has entered the cover.

According to a second aspect of the invention, the object is achieved by a working machine according to claim 9. More specifically by a working machine for use on a construction site, comprising a frame extending in a longitudinal direction having a first frame end portion and a second frame end portion. The working machine further comprising a dump body carried by said frame and capable of carrying a load, and a first propulsion axle coupled to said first frame end portion. Further, working machine comprising a second propulsion axle coupled to said second frame end portion, wherein the first propulsion axle is a working machine axle arrangement according to any one of the embodiments above, and the working machine axle is arranged so that the electrical engine faces away from a transverse centre line of said working machine when in use.

According to one embodiment, the dump body may be any type of receptacle for gravel, rocks, soil, sand and other materials being handled at a construction site, mine or the like.

According to one embodiment, the first frame end portion is arranged on an opposite side relative the second frame end portion along the longitudinal extension, and the first frame end portion being a load dumping end portion. Hereby, the load may be off-loaded at said first frame end portion by e.g. tilting the dump body so that the second end is inclined until the load falls out at the load dumping end portion.

According to one embodiment, the second propulsion axle also is a working machine axle arrangement according to any one of the embodiments above, wherein the second machine axle is oriented mirrored relative said transverse centre line of the working machine so that said electrical engine of the second machine axle faces away from the transverse centre line of said working machine when in use. By having two identical or at least very similar machine axle arrangements on each side, the production cost may be reduced due to the decreased number of articles, e.g. different axles front and back or the like.

According to one embodiment, the working machine is adapted for bidirectional driving. Hereby, the driving efficiency may be increased since the working machine does not have to turn around, but may drive in the direction based on what is most efficient.

According to one embodiment, the working machine further comprises a power source carried by said frame and arranged between said first propulsion axle and said second working machine axle. The power source may be any type of electrical source for supplying the electric engine with power, e.g. a battery arrangement.

Hereby, the power source may be placed centrally on the vehicle. It is also possible to supply both two engines from the power source. In other embodiments several battery arrangements may be used, either shared for both engines or dedicated to each engine.

According to one embodiment, the working machine further comprises a tilting arrangement for tilting said dump body. Hereby, the load may be easily off-loaded by tilting said dump body. According to one embodiment, the working machine is a hauler.

According to one embodiment, the working machine further comprises a first steering arrangement mechanically coupled to one steering mount portion on each of said two opposing end portions of the first working machine axle, and wherein said first steering arrangement is arranged onto an inner side of said axle main body of said first working machine axle.

According to one embodiment, the steering arrangement is controlled by the control unit in the electrical control arrangement. Hereby, as discussed above the electrical engine may be arranged on an opposite side of a steering arrangement attached to the steering mount portions, which allows a free design of the engine and the steering arrangement without having to share the same space. Hereby, a cheaper design and/or more optimal form may be given to the steering arrangement and/or the electrical engine.

In one embodiment the working machine further comprise a second steering arrangement mechanically coupled to one steering mount portion on each of said two opposing end portions of the second working machine axle, and wherein said second steering arrangement is also arranged onto an inner side of said axle main body of said second working machine axle. Hereby, the working machine may be controlled by steering the propulsion means on either one (or both) of the working machine axle(s), which increase the efficiency of the vehicle.

According to one embodiment, the working machine further comprises one single speed gear box for each working machine axle, each single speed gear box being adapted to transfer a driving motion from said electrical engine to said drive shaft, respectively.

Further advantages and advantageous features of the invention are disclosed in the following description and in the dependent claims. Of course any embodiment of described in relation to the axle may be implemented on the propulsion axle on a working machine, and the other way around; the embodiments described in relation to the working machine may be implemented on the separately claimed propulsion axle.

### BRIEF DESCRIPTION OF THE DRAWINGS

With reference to the appended drawings, below follows a more detailed description of embodiments of the invention cited as examples. In the drawings:
Fig. 1 is a perspective view of a working machine according to one embodiment of the invention.
Fig. 2 is a side view of a working machine according to one embodiment of the invention.
Fig. 3 is a front view of a working machine according to one embodiment of the invention.
Fig. 4 is a perspective view of a propulsion axle arrangement according to one embodiment of the invention.
Fig. 5 is a perspective view of a propulsion axle arrangement according to one embodiment of the invention.
Fig. 6 is a perspective view from underneath of a propulsion axle arrangement according to one embodiment of the invention.
Fig. 7 is a top view of a propulsion axle according to one embodiment of the invention.
Fig. 8 is a simplified illustration in a perspective view of a working machine having one propulsion axle at each end portion, according to one embodiment of the invention.

### DETAILED DESCRIPTION OF EXAMPLE EMBODIMENTS OF THE INVENTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

In the following, a working machine 1 is described. The inventive concept is applicable on any working machines within the fields of industrial construction machines or construction equipment, in particular dumpers/haulers. Although the invention will be described with respect to a hauler, the invention is not restricted to this particular machine, but may also be used in other working machines such as articulated haulers, excavators, backhoe loaders and wheel loaders.

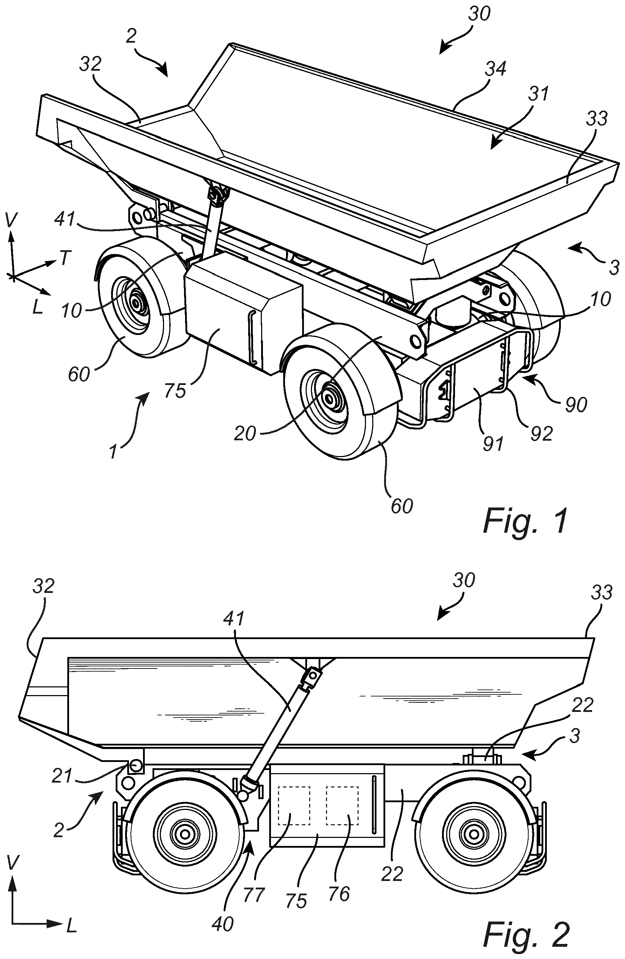

As seen in fig. 1 the working machine comprises a dump body 30 for accommodating a load. Merely as an example, and as is indicated in Fig. 1, the dump body 30 may be a loading platform of the working machine 1. The working machine 1 is adapted to have a load receiving condition in which the dump body 30 comprises an open load receiving area 31 outwardly delimited by a load receiving area circumference 34. In fig. 1 an embodiment is shown where the working machine 1 is adapted to assume the load receiving condition in a normal state. In other words, the working machine 1 embodiment illustrated in Fig. 1 comprises a dump body 30 which always comprises an open load receiving area 31 outwardly delimited by a load receiving area circumference 34. However, it is also envisioned that embodiments of the working machine may comprise cover means (not shown), such as a lid, that is adapted to cover at least a portion of the dump body 30 and which cover means can be moved in order to obtain the open load receiving area 31 to thereby arrive at the open load receiving area 14. Generally, the open load receiving area 31 may be an area that is directly accessible from the environment surrounding the working machine 1. For instance, the open load receiving area 31 may be an area that is directly accessible from the above of the dump body 30.

The working machine does not have a driver seat, but is intended to be autonomously and/or remotely driven. The working machine 1 further comprises a load dumping side 2 and an opposite side which herein referred to as the opposite side 3. The opposite side 3 may be used as a front end side when the machine is driven in the direction that puts the opposite side 3 first. However, the working machine 1 may be drivable in any direction, i.e. it is bidirectional. Further, the dump body 30 comprise a load dumping end portion 32 arranged on the working machines load dumping side 2, and an opposite end portion 33 arranged on the working machines opposite side 3.

Further, still refereeing to fig. 1 the working machine 1 comprise a working machine frame 20 to which a pair of propulsion axles 10 are mounted. The working machine frame 20 further supports the dump body 30, and thereby carries the load of anything contained in the dump body 30 as well as the weight from the dump body itself. The propulsion axles 10 are equipped with a propulsion hub 14 (not shown in fig. 1) for driving propulsion means 60. In the figures the propulsion means 60 are illustrated as wheels, however, they may also be crawlers.

Further, an electrical engine 70 is installed onto the propulsion axle 10 being coupled to a drive shaft (not shown). The electrical engine 70 is mounted onto a front side of the propulsion axle's 10 elongated main body, said front side facing away from a centre of the working machine 1. The working machine may comprise one electrical engine 70 on each machine axle 10.

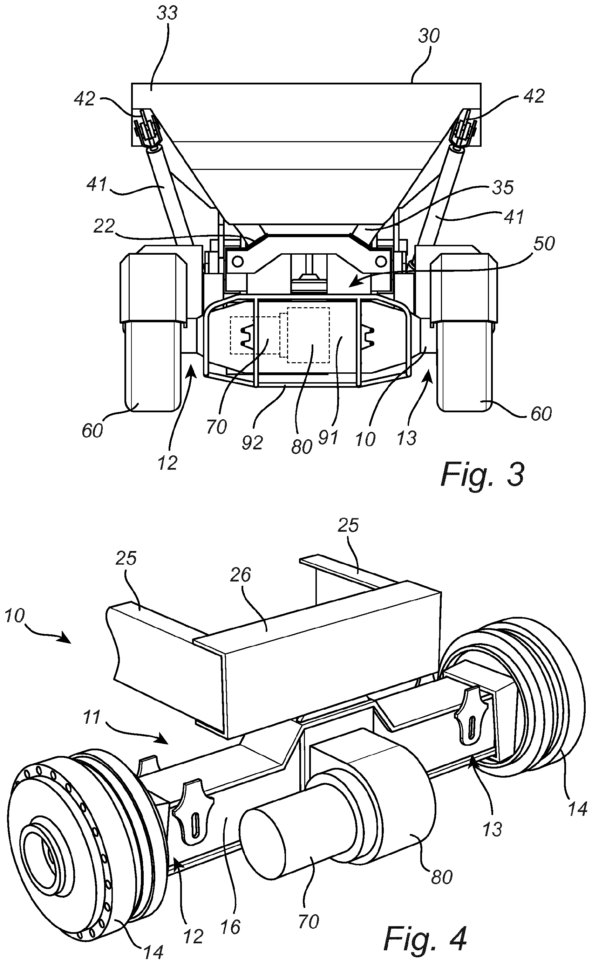

Further, the working machine 1 may comprise a tilting arrangement 40, such as a tilting arrangement comprising one or more tilting actuators 41, such as hydraulic actuators, for tilting the dump body 30 of the working machine 1. The tilting arrangement 40 is in one end attached to the frame 20 and in the other end to the dump body 30. Preferably, the tilting arrangement 40 comprise two tilting actuators 41 arranged at different sides of the dump body to ensure a stable tilting (as shown in fig 3).

Figure 1 finally disclose an electrical control arrangement 75, arranged to the frame of the working machine 1. The electrical control arrangement 75 may comprise (as illustrated in fig 2) a power source 76 e.g. a battery arrangement, for supporting the electrical engine(s) 70 and any other components with power. Further, the electrical control arrangement 75 may comprise a control unit 77 for controlling the working machine. The control unit 77 may be capable of receiving a remote control signal to enable the working machine to be remotely controlled. Such a signal may be received from an external transmission unit (not shown). It may further be capable of communicating any information to or from the working machine from or to a remote server (not shown). Such information may comprise usage data, service information, battery status, load, weight, capacity utilization or any other relevant information.

The load receiving area circumference 34 may form a closed loop that fully encloses a continuously open load receiving area 31. However, some embodiments of the working machine 1 may comprise one or more internal partitioning walls partitioning the open load receiving area 31 into two or more compartments (not shown).

The propulsion axle arrangement 10 also comprises a cover arrangement 90 for covering the electrical engine, wherein the cover arrangement comprises a first (inner) cover 91 and a second cover 92 being arranged on the outside of the first cover.

Turning to fig. 2, being the side view of the same embodiment of the vehicle, the working machine frame 20 is clearly illustrated as being coupled the propulsions means 60, i.e. the wheels, (via the propulsion axle, which is not seen in this view). Further, the illustration shows that the dump body 30 rests on the working machine frame 20. However, in the illustrated embodiment it is not in contact with the frame 20 during its whole length, but rather at the load dumping side 2 at an attachment means 21 being a pivotal arrangement allowing the dump body 30 to pivot relative the frame 20. The dump body 30 further rests on the frame 20 at a guiding plate portion 22, which will be further described in relation to fig 3. Further, the tilting arrangement 40, with one of the side's tilting actuators 41 is clearly sown in fig. 2. The tilting actuator 41 is in one end attached to the frame 20 and in the other end to the dump body 30. Further, the tilting actuator may be extended so that the dump body's opposite end portion 33 is elevated. Preferably, the tilting arrangement 40 comprise two tilting actuators 41 arranged at different sides of the dump body to ensure a stable tilting, and to spread the load on two actuators enabling a lower dimension of the tilting actuators for the same load.

As is also clearly shown in fig. 1 and 2, the working machine 1 extends in at least a longitudinal direction L, a vertical direction V and a transversal direction T. The longitudinal direction L is parallel to an intended direction of travel of the working machine 1. Further the transversal direction T is perpendicular to each one of the vertical direction V and the longitudinal direction L. That is, the transversal direction T is parallel to the general extension of the propulsion axles 10. These directions are intended to be interpreted relative the working machine, and should not be interpreted as being dependent of the vehicle's orientation.

Further, the electrical control arrangement 75 is illustrated in the side view of fig. 2. The placement of the electrical control arrangement 75 should only be considered to be an example. It is preferably arranged between the two working machine axles 10 and coupled to the frame 20, but the exact placement may be chosen in so that it is functionally placed in the environment which the working machine is to be used. Having the electrical control arrangement 75 on the outside of the frame, so that it is accessible from the side of the vehicle gives that advantage that both maintenance is facilitated and that any transceiving unit in the control arrangement, sending and/or receiving information may obtain a better signal and/or range. However, it would be possible to place the electrical control arrangement 75 transversally central on the working machine, i.e. under the dump body 30.

The dump body 30 of the working machine may further be designed so that the working machine 1 can assume a position relative to a second working machine of the same type, in which position the dump bodies at least partly overlap in at least the longitudinal or transversal direction. Generally, overlap of the dump bodies may be obtained on any side of the working machines 1. For instance, the overlap may be obtained along the longitudinal sides or the transversal sides of the working machines 1. For example, the above overlap may be at least 2%, preferably at least 5%, more preferred at least 8% of the load receiving length of the open load receiving area 31 in said longitudinal direction L.

Further, in figure 3 the working machine is shown in a front view, in one embodiment of the invention. In the front view, the working machine 1 is illustrated from one of the transversal sides, and more specifically from the side called the opposite side 3, being the side opposite of the load dumping side 2. The frame 20 is coupled to the propulsion axle 10, via the suspension arrangement 50 allowing the frame 20 to move relative the propulsion axle 10 in the vertical plane. Further, the propulsion axle comprises two opposing end portions 12, 13 each having a propulsion hub (not shown) coupled the propulsions means 60, i.e. the wheels in this embodiment. Further, the dump body 30 rests on the working machine frame 20 at a guiding plate portion 22. The dump body 30 comprise a load supporting end portion 35, which cooperates with a guiding plate portion 22 and works as a guiding means for guiding the dump body towards a transversally centred position during a pivotal downward movement of the dump body relative the frame. The formation of these guiding plate portions and load supporting end portions may be formed with an angle to a horizontal plane, i.e. with a vertical inclination. Further, the tilting arrangement 40 is clearly shown having two tilting actuators 41 arranged on each longitudinal side of the dump body. The tilting actuators 41 are attached to the dump body 30 at its top portion in a rotational coupling 42. Further, the tilting actuator may be extended so that the dump body's opposite end portion 33 is inclined. Finally, fig. 3 illustrates that the propulsion axle is equipped with an electrical engine 70 being drivably coupled to a drive shaft inside the propulsion axle (thus not shown) and mounted onto the illustrated front side 16 of the elongated main body 11, said front side 16 facing away from a centre of the working machine 1 in the transversal direction. This is further illustrated in the subsequent figures. In figures 1-3 the electrical engine 70 and gear box 80 are hidden by the engine cover 90, and is thus only noted with a dashed line in fig 3.

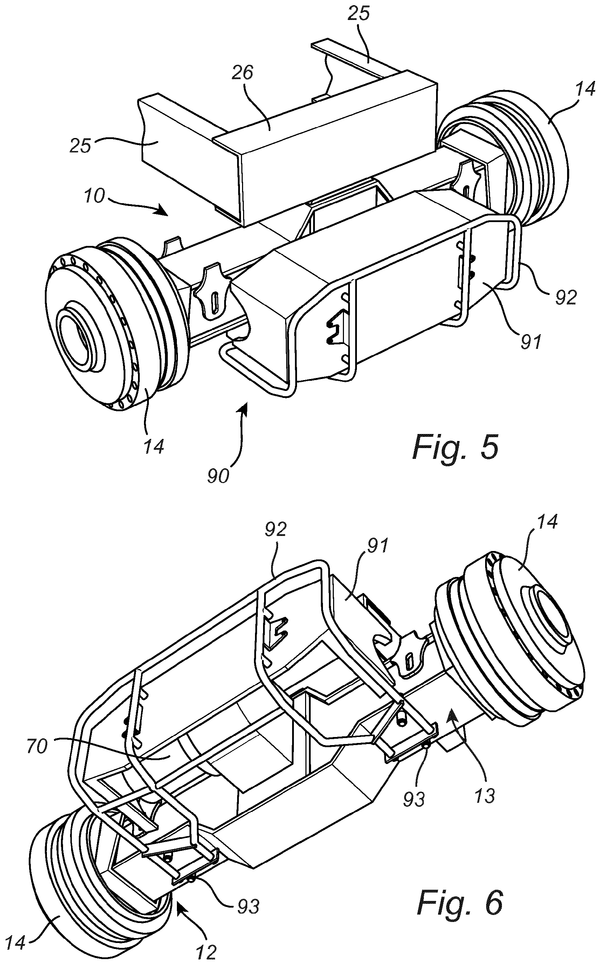

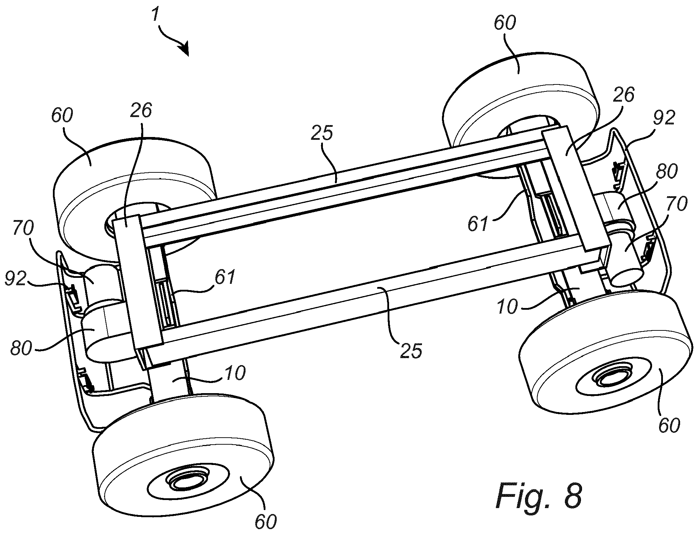

Moving on, figures 4-7 illustrates different views of a propulsion axle. In figures 5 and 6 the propulsion axle arrangement 10 also comprises a cover arrangement 90 for covering the electrical engine, wherein the cover arrangement comprises a first (inner) cover 91 and a second cover 92 being arranged on the outside of the first cover. Further, the propulsion axle is mechanically coupled to a working machine frame 20. Although the working machine frame may have many different forms, the working machine frame 20 in fig. 4 is illustrated by two longitudinal frame beams 25 having a main extension in the longitudinal direction. Further, the working machine frame 20 comprise at least two transversal frame beams 26 (only one shown in figures 4-7, but figure 8 shows two). The transversal frame beams 26 are mechanically coupled to the longitudinal frame beams 25, either directly or indirectly with intermediate coupling means such as steel gussets or equivalent. The frame beams 25, 26 may be coupled by welding, bolts, rivets or other coupling means (including a combination of several coupling means).

Turning specifically to fig. 4, the propulsion axle 10 comprise a main body 11 extending in a transversal direction (the working machine extending in the longitudinal direction). The main body 11 in fig. 4 comprise four substantially flat sides, a front side 16, an inner side 17, and an upper side and a lower side. In other embodiments the main body may have a substantially circular cross-section so that each of said front side 16, inner side 17, upper side and lower sider are arched. The four sides should be read as portions of the main body 11 wherein each portion are connected with the two adjacent sides. In some embodiments the main body 11 may be formed from one, two, three, four or more components. Thus, the components of the main body are not to be construed as the front/inner sides etc. per se, but rather the orientation of the side portions should determine which side is which.

The main body 11 further comprise a first end portion 12 and a second end portion 13. The first and second end portions 12, 13 are arranged on opposing end sides of the main body 11, in the transversal direction. Each one of the first end portion 12 and the second end portion 13 comprise a propulsion 14 for being drivably coupled to propulsion means 60 such as wheels or crawlers. Inside the main body, there is a drive shaft which is connected to the propulsion hubs. The drive shaft may be a single component or comprise several drive shaft components put together to function as a drive shaft. The drive shaft is drivably connected to an electrical engine 70, preferably via a gear box 80. The gear box may be a single speed gearbox. The engine 70 (and the gear box in fig 4) are mounted on a front side 16 of the main body 11 of the propulsion axle 10 allowing easy access.

In fig. 5 the same propulsion axle arrangement 10 is illustrated, but where the arrangement further comprise a cover arrangement 90 for protecting the electrical engine. The cover arrangement is thereby also arranged onto the front side 16 of propulsion axle 10. The cover arrangement 90 covers both the electrical engine 70 (not shown in fig 5) and the gear box 80 (not shown in fig. 5). The cover comprises a first cover 91 which has several sides being substantially sealed so that they protect the engine from smaller fragments and pieces such as dirt, gravel other fragments of material from minerals stones, sand, soil or other material present at a construction working site. Further, the sides of the inner first cover 91 may also protects the electrical engine from liquids like water etc. The cover arrangement 90 further comprise a second cover 92 for protecting the engine from impacts. The second cover may be, as illustrated, formed by a metal frame. The metal frame comprises horizontal members, e.g. made by round/square steel units, that are connected to vertical members, e.g. made by round/square steel units. The horizontal members and vertical member together may form a bull bar. The bullbar may be anchored in the main body of the propulsion axle 10 at an anchor point 93. The cover arrangement may be anchored to the propulsion axle 10 at several anchor points, e.g. in different portions of the main body 11. The second cover 92 may protect the engine from collision with objects being relatively large, and typically situated on the ground. E.g. larger stones, jersey barriers, buildings, vehicles etc.

In the illustrated embodiment, the first cover 91 is arranged closer to the engine than the second cover, making it possible for the second cover 92 to take up larger impacts before affecting the first cover 91. However, it would be possible to have the second cover 92 arranged on the inside of the first cover 91 and letting the second cover act as a reinforcing structure on the inside of the first cover to increase the overall impact tolerance of the cover arrangement 90. The first cover may be made of a rubber based material or a sheet metal, as discussed in the summary above. The first cover 91 may be dimensioned to take up impact from objects being smaller than any distance between to frame parts of the second cover.

Moving on to fig. 6, the same propulsion unit as illustrated in fig. 5 is shown, but from a perspective view from underneath the propulsion axle. From this view one may see that the first cover 91 comprises at four substantially sealed sides for blocking e.g. gravel, dirt and liquids. In fig. 6 the whole bottom of the cover arrangement 90 is open, allowing fluids or fragments that has entered the cover arrangement 90 to exit the cover this way. It is also possible that the first cover 91 comprise a bottom side of (not shown), so that the electrical engine 70 is even more protected. In such an embodiment, the bottom side may preferably comprise an aperture for letting out e.g. small fragments and liquids.

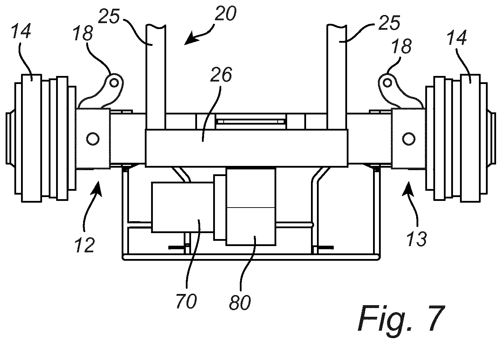

Fig. 7 illustrates the same propulsion unit as is illustrated in fig. 5, but from a top view and wherein the first cover 91 is removed to be able to illustrate and explain the invention. Figure 7 illustrates the same working machine frame 20 comprising the longitudinal frame beams 25 and the transversal frame beam(s) 26 (only one shown in fig 7). Further, from fig 7 it is clear that each of the first end portion 12 and second end portion 13 comprise a steering mount portion 18. The steering mount portions 18 allows for mounting a steering arrangement 50 (not shown in fig 7) that may be controllably coupled to the control unit 77 for controlling the steering of the working machine. Since the engine is placed on the front side 16 of the propulsion axle 10 there is plenty of room for arranging the steering arrangement on the inner side 17 of the propulsion axle 10.

Fig. 8 is a simplified perspective top view illustration of the working machine 1 having one propulsion axle 10 at each end portion, i.e. the machines' load dumping side 2 and the machines' opposite side 3. In figure 8, the tilting arrangement 40 and a lot of other details are omitted to be able to illustrate and explain the invention. The figure 8 is merely included to illustrate how two similar or identical propulsion units may be installed onto a working machine. By having two identical machine axle arrangements 10 on each side, the production cost may be reduced due to the decreased number of articles, e.g. different axles front and back or the like.

It is to be understood that the present invention is not limited to the embodiments described above and illustrated in the drawings; rather, the skilled person will recognize that many changes and modifications may be made within the scope of the appended claims.

## Claims

1. A working machine (1) axle arrangement (10), comprising
a propulsion axle (10) having an elongated main body (11) having two opposing end portions (12, 13) each being adapted to be equipped with a propulsion hub (14) for driving a working machine propulsion means (60), said elongated main body (11) of said propulsion axle (10) being formed and sized to be mechanically coupled to a working machine frame (20),
a drive shaft coupled to said propulsion hubs (14) and being arranged inside said main body, **characterized in that** the propulsion axle (10) further comprises
an electrical engine (70) drivably coupled to said drive shaft and mounted onto a front side (16) of the elongated main body (11), said front side facing away from a centre of the working machine (1) when in use.

2. A working machine (1) axle arrangement (10) according to claim 1, further comprising one steering mount portion (18) on each one of said two opposing end portions (12, 13) and arranged onto an inner side (17) of said main body (11), said inner side being opposite said front side (16) relative a transversal centre line running along said elongated main body.

3. A working machine (1) axle arrangement (10) according to any one of claims 1 or 2, further comprising a gearbox (80) adapted to transfer a torque or driving motion from said electrical engine (70) to said drive shaft.

4. A working machine (1) axle arrangement (10) according to claim 3, further comprising an emergency brake function.

5. A working machine (1) axle arrangement (10) according to any one of claims 1-4, wherein said electrical engine is adapted to provide all service braking capability to the working machine (1), when in use.

6. A working machine (1) axle arrangement (10) according to any one of claims 1-5, further comprising a cover arrangement (90) formed and sized to protect said electrical engine (70), said cover arrangement being movably coupled to said axle's elongated main body (11).

7. A working machine (1) axle arrangement (10) according to claim 6, wherein the cover arrangement (90) comprises a first cover (91) for protection against dirt and gravel.

8. A working machine (1) axle arrangement (10) according to any one of claims 6 or 7, wherein the cover arrangement (90) comprises a second cover (92) protecting the electrical engine (70) against impacts.

9. A working machine (1) for use on a construction site, comprising a working machine frame (20) extending in a longitudinal direction having a first frame end portion (2) and a second frame end portion (3),
a dump body (30) carried by said frame and capable of carrying a load,
a first propulsion axle coupled to said first frame end portion (2), and
a second propulsion axle coupled to said second frame end portion (2), wherein the first propulsion axle is a working machine axle arrangement (10) according to any one of claims 1-8, and is arranged so that said electrical engine (70) faces away from a transverse centre line of said working machine (1) when in use.

10. A working machine (1) for a construction site according to claim 9, wherein said second propulsion axle also is a working machine axle arrangement (10) according to any one of claims 1-8, wherein said second machine axle is oriented mirrored relative said transverse centre line of the machine so that said electrical engine (70) of the second machine axle faces away from the transverse centre line of said working machine (1) when in use.

11. A working machine (1) for a construction site according to any one of claims 9-10, wherein said working machine (1) is adapted for bidirectional driving.

12. A working machine (1) for a construction site according to any one of claims 9-11, further comprising a power source (76) carried by said frame and arranged between said first propulsion axle (10) and said second working machine axle.

13. A working machine (1) for a construction site according to any one of claims 9-12, further comprising a tilting arrangement (40) for tilting said dump body.

14. A working machine (1) for a construction site according to any one of claims 9-13, wherein said working machine (1) is a hauler.

15. A working machine (1) for a construction site according to any one of claims 9-14, further comprising a first steering arrangement (61) mechanically coupled to one steering mount portion (18) on each of said two opposing end portions (12, 13) of the first working machine axle (10), and wherein said first steering arrangement is arranged on an inner side (17) relative said axle main body of said first working machine (1) axle.
